# EUROPÄISCHE PATENTSCHRIFT

(11) **EP 0 477 476 B1**
(45) Veröffentlichungstag und Bekanntmachung des Hinweises auf die Patenterteilung: **21.02.1996**
(21) Anmeldenummer: 91110132.7
(22) Anmeldetag: 20.06.1991
(51) Int. Cl.: B29C 44/02, B29C 67/20

(54) **Verfahren und Vorrichtung zur Herstellung von Formteilen oder Gegenständen**
Method and apparatus for producing moulded articles
Méthode et dispositif pour la production d'objets moulés

(30) Priorität: 26.09.1990 DE 4030477; 26.09.1990 DE 4030478
(43) Veröffentlichungstag der Anmeldung: 01.04.1992
(73) Patentinhaber: ALKOR GMBH KUNSTSTOFFE, D-81451 München (DE)
(72) Erfinder: Landler, Josef, D-81377 München (DE); Fink, Roland, W-8130 Starnberg (DE)

(56) Entgegenhaltungen:
- DE-A- 2 411 670
- DE-A- 2 437 224
- DE-A- 3 330 826
- DE-A- 3 604 175
- PATENT ABSTRACTS OF JAPAN vol. 8, no. 9 (M-268)(1446) 14. Januar 1984 & JP-A-58 171 921 (HONDA GIKEN KOGYO K.K.)

## Beschreibung

Die vorliegende Erfindung betrifft ein Verfahren gemäß dem Oberbegriff des Anspruchs 1 und eine Vorrichtung gemäß dem Oberbegriff des Anspruchs 15 zur Herstellung von Formteilen.

Gemäß der Erfindung wird das Verfahren zur Herstellung von Kraftfahrzeugteilen, Kraftfahrzeuginnenverkleidungen sowie Flugzeuginnenverkleidungen verwendet, wobei zur Herstellung der geformten Kunststoffschicht Polyolefinfolien, thermoverformbare polyolefinhaltige Bahnen oder Platten oder Polyolefin- oder polyolefinhaltige Massen, -blasformlinge oder -schmelzen eingesetzt und unter Verwendung bestimmter Verfahren in bestimmten ausgewählten Formen und Partikel verarbeitet werden.

Aus der DE-A-3604175 ist bereits ein Verfahren zum Formpressen von Polystyrolschaum in Verbindung mit Polystyrol-Hartfolie bekannt. Bei diesem Verfahren wird die Polystyrol-Hartfolie in Berührung zu einer Formhälfte einer Preßform vorgeformt und der Kunststoff durch Impulsbeaufschlagung mit Dampf auf den harten Kunststoff formgepreßt. Die Verformung erfolgt dabei unter Verwendung einer Formhälfte einer Preßform, bei der durch einen Hydraulikzylinder der Stempel bewegbar angeordnet ist, so daß mit Hilfe dieses Stempels im Positivtiefziehverfahren eine Vorformung der Polystyrolschaumplatte im Positivtiefziehverfahren erfolgt. In einem weiteren Arbeitsschritt wird der Polystyrolschaum, z.B. in Form von Kügelchen, zwischen den Formhälften formgepreßt, also verpreßt, wobei zusätzlich eine Dampfimpulsbeaufschlagung verwendet wird.

Innerhalb des Verfahrens gemäß DE-A-3604175 wird Polystyrol zunächst im Positivtiefziehverfahren ausgehend von Platten tiefgezogen und die Polystyrolschaumkugeln in einer Form mittels Preßformen unter Druck zusammen mit der Platte preßgeformt, wobei die Polystyrolkugeln in ihrer Lage zumindestens kurz vor dem Zusammendrücken der Formhälften noch verändert werden können.

Das Verfahren gemäß DE-A-3604175 wird für die Herstellung unkomplizierter Teile, z. B. zur Herstellung von Türen oder Wandungen für Kühlschränke, eingesetzt, wobei sich die Dämmeigenschaften des Polystyrols mit den mechanischen Eigenschaften der Polystyrolhartfolie oder -platte vereinen.

Aus der Literaturstelle JP-A-58171921 in Form des Derwent-Reports ist die Verwendung von schäumbaren Kunststoffteilchen zur Herstellung von Kunststoffgegenständen bekannt, wobei ein spezieller Kunststoff nicht beansprucht wird. Innerhalb des Verfahrens gemäß JP-A-58171921 werden keine Negativtiefformen oder Negativtiefziehformen verwendet. Narbungen, Oberflächendekorationen und dergleichen sind auch bei diesem in der JP-A-58171921 beschriebenen Verfahren nicht möglich.

Es ist weiterhin bereits bekannt, Formteile oder Gegenstände im Negativtiefziehverfahren, im Positivtiefziehverfahren, im Blasverfahren, im Extrusionsgußverfahren oder im Slush-Molding-Verfahren herzustellen und unter Verwendung chemischer Treibmittel enthaltenden Massen oder Flüssigkeiten zu hinterschäumen. Da verschiedene Kunststoffschäume sich nur schwer mit anderen Kunststoffschichten, Folien oder Bahnen verbinden, aufgrund von Weichmacherwanderungen oder Wanderungen anderer Bestandteile, u.a. die chemisch verschäumten Massen von den Folien, Schichten und dergleichen sich nachträglich trennen können, zusätzlich Fehlerstellen und dergleichen auftreten, weisen diese Verfahren Nachteile auf.

Ziel und Aufgabe der vorliegenden Erfindung war es ein Verfahren und eine Vorrichtung zu finden, mit denen u.a. auch dicke Schaumschichten (neben dünnen Schaumschichten) erzielt werden können, ohne daß die vorgenannten Nachteile der Trennung vom Schaum im erheblichen Umfang auftreten. Der erzielte Schaum sollte eine gewisse Formstabilität aufweisen und nicht dazu führen, daß bei dem Schäumungsvorgang Narbungen, Prägungen, Oberflächendekorationen und dergleichen in ihrer Profilierung vermindert oder verringert werden. Die hergestellten Formteile sollten leicht recyclefähig sein und/oder für Kraftfahrzeuge, Innenverkleidungen für Kraftfahrzeuge und Flugzeuge verwendbar sein.

Erfindungsgemäß wurde festgestellt, daß ein Verfahren gemäß dem Anspruch 1 und eine Vorrichtung gemäß dem Anspruch 15 diesen Zielen und Aufgaben gerecht wird.

Nach einer bevorzugten Ausführungsform des Verfahrens werden als Kunststoffschaum- oder Kunststoffhohlpartikel, die in den Zwischenraum zwischen dem Kunststofformteil oder dem Gegenstand und dem Verschlußdeckel oder Verschlußteil eingebracht werden, solche verwendet, die sich bei Temperaturen von 80 bis 150 °C, vorzugsweise 100 bis 130 °C, um mehr als 3 Vol.-%, vorzugsweise mehr als 5 Vol-%, ausdehnen. Diese können vorgeschäumt sein oder ein physikalisches oder chemisches Treibmittel enthalten, das eine nachträgliche Volumenausdehnung bei diesen Temperaturen bewirkt.

Dadurch, daß die geformte Kunststoffschicht bzw. das Kunststofformteil und die Kunststoffschaum- oder -hohlpartikel den gleichen Kunststoff (Polyolefin) enthalten oder einen chemisch ähnlichen polyolefinhaltigen Kunststoff, wobei als Kunststoffschaum oder Kunststoffhohlpartikel vorzugsweise geschlossenporige Partikel verwendet werden, ist das Formteil oder der Gegenstand recyclefähig.

Eine andere bevorzugte Ausführungsform ist dadurch gekennzeichnet, daß unter Verwendung einer Temperaturdifferenz von vorzugsweise mehr als 30 °C zwischen der heißen Folie, Bahn, Platte, Masse, dem Blasformling oder der Schmelze und einer kälteren Negativform diese in die Negativform eingebracht wird und im Augenblick der Berührung mit der strukturierten Oberfläche oder Wandung des Negativwerkzeuges diese die Oberflächenstruktur, Oberflächendekoration, Narbung oder Strukturierung und die Form derselben annimmt und nachfolgend in der Negativform abkühlt und mit einer Schaumschicht versehen wird.

Eine weitere bevorzugte Ausführungsform ist dadurch gekennzeichnet, daß unter Verwendung einer Temperaturdifferenz von mehr als 30 °C, vorzugsweise mehr als 50 °C, zwischen der heißeren Folie, Bahn oder Platte und einer kälteren Negativtiefziehform, abgekühlt wird.

Das Heißgas oder der Wasserdampf wird bevorzugt in die Form mit einer Temperatur von 105 bis 160 °C, vorzugsweise 110 bis 150 °C, eingeleitet.

Nach einer bevorzugten Ausführungsform wird die Kunststoffolie, -bahn, -platte, -masse oder der Blasformling mit einer mittleren Schichtdicke von 0,25 bis 2,0 mm, vorzugsweise 0,5 bis 1,5 mm, in Form einer ungeschäumten Polyolefinmono- oder Mehrfachschicht verwendet, die eine Schaumschicht mit einer Dicke on 0,5 bis 6,0 mm, vorzugsweise 1 bis 5 mm, besitzt, wobei die Schaumschicht ein Schaumraumgewicht oder eine Schaumdichte von 25 bis 100 kg pro m³, vorzugsweise 45 bis 80 kg pro m³, aufweist. Auf diese Schaumschicht, die vorzugsweise durch chemische Treibmittel, physikalische Treibmittel oder durch Strahlenvernetzung hergestellt ist, werden die Polyolefinpartikel aufgebracht, erhitzt und damit verbunden.

Bevorzugt ist der Verschlußdeckel oder das Verschlußteil hinsichtlich seines Profiles und seiner Formgebung in einem Abstand von der Negativform oder Negativtiefziehform so angeordnet, daß sie in der Dicke (abzüglich der in der Negativ- oder Negativtiefziehform eingebrachten und verformten Schicht, Folie, Bahn oder des Schaumlaminates), im Profil und in der Formgebung derjenigen des Fertigteiles oder Gegenstandes direkt, annähernd oder in Teilbereichen entspricht.

Nach einer anderen Ausführungsform ist in der Form und/oder an oder in der Nähe des Verschlußdeckels oder des Verschlußteiles ein Träger und/oder eine Versteifung oder ein Versteifungskörper angeordnet oder angebracht, wobei ein Träger oder eine Versteifung oder ein Versteifungskörper verwendet wird, der bzw. die mehrere Durchgänge, Öffnungen, Ausnehmungen, Poren oder ähnliche Durchtrittsöffnungen für das Heißgas oder den Wasserdampf aufweist.

Nach einer anderen Ausführungsform wird ein Träger und/oder ein Versteifungskörper eingesetzt, der auf seiner Rückfläche (der Negativform abgewandten Fläche) in Teilbereichen in Positivform die Form der Rückfläche des Fertigteiles aufweist.

Bevorzugt wird ein Verschlußdeckel oder ein Verschlußteil innerhalb des Verfahrens verwendet, der bzw. das mehrere, vorzugsweise über die Fläche der Verschlußform verteilte Einleitungsöffnungen für das Heißgas und/oder den Wasserdampf aufweist und mindestens eine Ableitungsvorrichtung, eine Ableitungsöffnung oder ein Ableitungsrohr für das durchgeretene Heißgas, für Wasserdampf und/oder für Wasser besitzt.

Nach einer weiteren Ausführungsform wird die Temperatur der Rückseite oder Rückfläche der Polyolefinschicht in der Negativform unmittelbar nach der Verformung und bei, vor oder nach der Einbringung der Polyolefinpartikel auf eine Temperatur von 10 bis 120 °C, vorzugsweise 40 bis 90 °C, eingestellt oder diese Temperatur wird vor der Wasserdampfdurchleitung auf der Rückfläche der Polyolefinschicht eingestellt.

Nach einer bevorzugten Ausführungsform wird zur Regelung, Speicherung, Verteilung oder Zuleitung des Heißgases oder des Wasserdampfes und/oder zur Kühlung der Rückseite der Abschlußform oder des Abschlußdeckels eine an die Abschlußform oder den Abschlußdeckel angeordnete Kammer verwendet.

Nach einer anderen bevorzugten Ausführungsform wird eine poröse oder mikroporöse Formoberfläche enthaltende Negativform oder Negativtiefziehform mit Vorrichtungen zur Anlegung eines Unterdruckes oder Vakuums verwendet. Während des Einfüllvorganges oder der Injektion der Polyolefinpartikel oder polyolefinhaltigen Partikel oder während einer Zeitteilperiode des Einfüllvorganges oder der Injektion, vorzugsweise zu Beginn der Einfüllung der Polyolefinpartikel, wird auf das in der Negativform befindliche strukturierte, genarbte oder dekorierte und geformte Formteil, das vorzugsweise im Blasverfahren oder Blasformverfahren, Extrusionsverfahren oder Extrusionsgußverfahren oder aus Schmelzen, Schmelzbahnen, Schläuchen oder Formlingen eingebracht wurde, oder auf das in der Negativtiefziehform befindliche strukturierte, genarbte oder dekorierte, ungeformte Formteil, das aus polyolefinhaltigen oder Polyolefin bestehenden Folien, Bahnen, Schaumlaminatbahnen, Platten im Negativtiefziehverfahren verformt wurde, ein Unterdruck oder Vakuum auf die der Negativtiefziehform zugewandte strukturierte, genarbte oder dekorierte Oberflächenschicht ausgeübt, so daß das Formteil in den zahlreichen Poren oder Mikroporen während des Einfüll- oder Injektionsvorganges in der Lage gehalten oder fixiert wird.

Nach einer weiteren bevorzugten Ausführungsform wird während des Einfüllvorganges oder der Injektion der Polyolefinpartikel oder der polyolefinhaltigen Partikel zwischen der kälteren, genarbten, geprägten und/oder strukturierten Oberflächenschicht des Polyolefinformteiles oder des polyolefinhaltigen Formteiles oder Formteiles auf der Basis eines Schaumlaminates und der heißeren Rückschicht oder Rückseitenfläche des Polyolefinformteiles oder polyolefinhaltigen Formteiles ein Temperaturunterschied während der Dampfdurchleitung von mehr als 5 °C, vorzugsweise von mehr als 10 °C, eingestellt wird und nach dem Versintern, Verschmelzen, Verschweißen oder unter Haftverbindung Verformen der Polyolefinpartikel oder polyolefinhaltigen Partikel sowie nach dem Verbinden derselben mit dem Formteil oder während dieses Vorganges nachfolgend von der Negativtiefziehform und/oder Abschlußform eine Abkühlung des Formteiles oder Gegenstandes um mehr als 25 °C, vorzugsweise mehr als 40 °C, durchgeführt. Unabhängig von der anderen Verfahrensbedingung erfolgt die Einfüllung oder Injektion der Polyolefinpartikel in die Form unter Überdruck. Bevorzugt wird ein Druck von 1,04 kp/cm² bis 8 kp/cm², vorzugsweise 1,1 bis 4 kp/cm², verwendet.

Nach einer bevorzugten Ausführungsform der Vorrichtung ist bzw. sind an dem Verschlußdeckel oder dem Verschlußteil oder an mindestens einem Seitenwandteil mindestens eine Ableitungsvorrichtung zur Ableitung von Heißgas, Wasserdampf oder kondensierten Wasser angeordnet.

Nach einer weiteren bevorzugten Ausführungsform der Vorrichtung weist die Form und/oder der Verschlußdeckel oder das Verschlußteil, vorzugsweise die Negativform oder Negativtiefziehform eine poröse oder mikroporöse metall- oder metallegierungshaltigte oder mikrometallpartikelhaltige Oberflächenschicht auf, die im Metallspritzverfahren hergestellt ist. Die Oberflächenschicht besitzt eine Metallschichtdicke von 0,3 bis 4 mm, wobei die Poren oder Mikroporen durch die gesamte Schichtdicke der Metall- oder Metallegierungsschicht der Oberflächenschicht verlaufen. Danach ist mindestens eine Stützschicht angeordnet, die gegenüber der Metall-, Metallegierungsschicht oder mikrometallpartikelhaltigen Schicht im Durchschnitt größere Poren oder Mikroporen aufweist, wobei die Schichtdicke der Stützschicht vorzugsweise 8 bis 80 mm beträgt.

Nach einer bevorzugten Ausführungsform des Verfahrens werden als Polyolefinpartikel geschlossenporige Partikel in kugelähnlicher oder perlähnlicher Form, vorzugsweise aus oder unter Mitverwendung von Polypropylen oder Propylenschaum, mit einer durchschnittlichen Dicke von 10 µm bis 12 mm, vorzugsweise 0,5 mm bis 8 mm, eingesetzt. Nach einer anderen bevorzugten Ausführungsform weisen die Polyolefinpartikel mindestens zwei unterschiedliche Teilchengrößen auf.

Für die ein oder mehrschichtige verformte, strukturierte, genarbte oder geprägte Kunststoffschicht, Kunststoffolie oder Kunststoffolienbahn werden Polyolefine oder Polyolefinmischungen gegebenenfalls unter Mitverwendung anderer Kunststoffe oder Elastomere sowie gegebenenfalls Verarbeitungshilfsmittel und Zusatzmittel eingesetzt.

Dabei werden nach einer Ausführungsform Polyolefine verwendet, die mindestens eine reaktive Gruppen enthalten, z. B. polyolefinhaltige Ionomere oder reaktive Gruppen enthaltende Olefinco-, -ter- und/oder -pfropfpolymerisate und/oder ein Ionomeres enthaltendes Olefinhomo-, -co-, -ter- und/oder -pfropfpolymerisat.

Zusätzlich werden nach einer anderen Ausführungsform elastische reaktive Gruppen enthaltende Polymere oder mindestens ein thermoplastisches reaktive Gruppen enthaltendes Elastomeres oder ein reaktive Gruppen enthaltendes Polymeres oder Polymergemisches mit einem Anteil an elatischen Polymeren mitverwendet.

Die reaktive Gruppen des Polyolefins und/oder des zusätzlich reaktive Gruppen enthaltenden elastischen Polymers oder thermoplastischen Elastomers sind vorzugsweise Carboxyl-, Hydroxyl-, Anhydrid-, Amin-, Amid-, Isocyanat-, Epoxy- und/oder Nitril-Gruppen.

Bevorzugt werden nach einer Ausführungsform 0,01 bis 5 Gew.-Teile, vorzugsweise 0,1 bis 3 Gew.-Teile, mindestens eines Stabilisators, Antioxidants und/oder UV-Absorbers, und/oder 0,01, bis 5 Gew.-Teile, vorzugsweise 0,1 bis 3 Gew.-Teile, mindestens eines Farbstoffes und/oder Farbpigmentes, und/oder 0 bis 3 Gew.-Teile, vorzugsweise 0,01 bis 2 Gew.-Teile, mindestens eines Gleitmittels und/oder Antistatikums und/oder 0 bis 20 Gew.-Teile, vorzugsweise 1 bis 12 Gew.-Teile, mindestens eines Flammschutzmittels für die Schicht oder Folie oder Oberschicht mitverwendet.

Das reaktive Gruppen enthaltende Polyolefin besteht nach einer vorzugsweisen Ausführungsform aus einer Mischung oder Legierung und/oder einem Co- oder Pfropfpolymerisat aus einem Olefin, vorzugsweise Ethylen und/oder Propylen, und einer mindestens eine ungesättigte Bindung enthaltende Carbonsäure und/oder dessen Anhydrid, vorzugsweise Acrylsäure, Methacrylsäure, Maleinsäure und/oder Maleinsäureanhydrid, und/oder einem Olefin oder Polyolefin, vorzugsweise Ethylen oder Polyethylen und einer mindestens eine Epoxygruppe enthaltende Verbindung, vorzugsweise Methacrylatglycid oder einem Copolymerisat einer oder mehrerer dieser Verbindungen oder enthält diese.

Nach einer weiteren bevorzugten Ausführungsform besteht oder bestehen das oder die elastische(n) Polymere(n), die reaktive Gruppen oder zusätzlich reaktive Gruppen enthaltende Verbindungen besitzen, aus einem reaktive Gruppen enthaltenden Ethylen-Propylen-Mischpolymerisat (EPM), einem reaktive Gruppen enthaltenden oder reaktiv modifizierten Ethylen-Propylen-Dien-Mischpolymerisat (EPDM), raktive Gruppen enthaltenden Diblockpolymeren aus Styrol mit Butadien, mit Isopren, mit Ethylen-Butylen oder mit Ethylen-Propylen, vorzugsweise aus reaktive Gruppen enthaltenden Styrol-3-Blockpolymeren mit Ethylen-Butylen und Ethylen-Propylen, einem elastischen Polyester und/oder Polyetherester, Polyesteramid, Polyetheramid oder Copolyester oder Polyurethan oder Polyether-Urethansegmentpolymeren.

Gemäß der Erfindung enthält die Schicht, Kunststoffolie, Kunststoffolienbahn oder das daraus hergestellt Formteil nach einer Ausführungsform mindestens eine Schicht oder Folie, die als Kunststoffanteil oder Kunststoffmischung ein thermoplastisches Polyolefin-Elastomer oder -Elastomergemisch bestehend aus einem heterophasigen Polypropylen-Block-Copolymerisat mit einem Ethylen-Propylen-Copolymerisatanteil und/oder mindestens ein anderes Olefin- bzw. Polyolefin und Styrol bzw Polystyrol enthaltendes Block-, Diblock- oder Triblock- und/oder -Copolymerisat und/oder mindestens ein anderes reaktive Gruppen enthaltendes Olefin- bzw. Polyolefin und/oder Styrol bzw. Polystyrol enthaltendes Block-, Diblock- oder Triblock- und/oder -copolymerisat sowie gegebenenfalls Verarbeitungshilfs- und Zusatzmittel enthält oder daraus besteht.

Gemäß einer bevorzugten Ausführungsform der Erfindung wird anstelle einer Kunststoffbahn eine aus einem Extruder oder einer ähnlichen Plastifiziervorrichtung, vorzugsweise aus einem Breitschlitzextruder austretende Kunststoffschmelzbahn verwendet, dabei die der Negativtiefziehform abgewandte Fläche der Kunststoffschmelzbahn einer Vorkühlung unterworfen, so daß sich bereits unmittelbar nach dem Austritt aus dem Extruder auf der der Negativtiefziehform abgewandten Fläche eine selbsttragende Schmelzhaut bildet, wobei zwischen der Temperatur der Kunststoffschmelzbahn und der kälteren Negativtiefziehform ein Temperaturunterschied von mehr als 30 K, vorzugsweise mehr als 80 K, eingestellt wird und die Kunststoffschmelzbahn durch ein mindestens zweiteiliges Werkzeug, das als ein Werkzeugteil mindestens eine Negativtiefziehform und als mindestens zweites Werkzeugteil ein Gegenwerkzeug und/oder Stempel und/oder einen Halte-, Abdicht- und/oder Spannrahmen enthält, geführt, eingespannt, gehalten und/oder abgedichtet und abgetrennt sowie unter Verwendung der Negativtiefziehform und eines Druckunterschiedes, vorzugsweise Unterdruck, sowie unter Ausnutzung der Wärmekapazität der Kunststoffschmelzbahn geformt wird, wobei die Schmelzbahn die mikroporöse, genarbte, strukturierte, geformte und/oder mit Oberflächendekoration versehene Form der Negativtiefziehform annimmt und sofort um mehr als 70 K, vorzugsweise mehr als 100 K gekühlt oder schockgekühlt wird.

Nach einer bevorzugten Ausführungsform wird die Kunststoffschmelzbahn frei nach unten hängend durch das geöffnete, mindestens zweiteilige Werkzeug, von denen das eine Werkzeugteil die Negativtiefziehform und einen Rand, Halte-, Abdicht- oder Spannrahmen und/oder ein Schließteil, das andere Werkzeugteil ein Gegenwerkzeug und/oder Stempel und einen Rand, Halte-, Abdicht- oder Spannrahmen und/oder Gegenschließteil enthält, geführt, wobei die gekühlte Seite der Schmelzbahn der Öffnung oder Formoberfläche der Negativtiefziehform abgewandt ist. Die Werkzeugteile oder dessen Ränder, Halte-, Abdicht- oder Spannrahmen oder Schließteile halten die Schmelzbahn, spannen diese ein und dichten ab, vorzugsweise durch Zufahren oder Schließen des Werkzeuges, das gleichzeitig oder später die im Werkzeug eingeschlossene Schmelzbahn von der außerhalb des Werkzeuges angeordneten Schmelzbahn abtrennt. Die in dem Werkzeug eingespannte und gehaltene Schmelzenbahn wird unter Verwendung eines Unterdruckes und/oder durch Bewegung eines Stempels oder Gegenwerkzeuges zu der Negativtiefziehform vorgewölbt und nachfolgend in die Negativtiefziehform eingebracht und negativtiefgezogen.

Nach einer weiteren bevorzugten Ausführungsform wird ein Positivstempel oder ein Gegenwerkzeug verwendet, der bzw. das ganz oder in Teilbereichen der Form, Formoberfläche oder Oberflächenstruktur der Negativtiefziehform angepaßt ist oder diese in Positivform aufweist. Der Stempel wird in Richtung der zu verformenden Schmelzbahn vorgefahren und kühlt diese rückseitig. Auf die endverformte Schicht werden die Kunststoffschaumpartikel, vorzugsweise Polyolefinschaumpartikel, aufgebracht und verformt, versintert und verbunden.

Gemäß einer anderen Ausführungsform der Erfindung wird ein flächenförmiges Kunststoffextrudat in eine ständig während des Eingießens unter Vakuum oder Unterdruck stehende Negativform oder Negativtiefziehform, die vor dem Eingießen auf eine Temperatur unter 373 K, vorzugsweise unter 333 K, eingestellt ist, eingebracht, wobei der Extruder, oder Breitschlitzextruder und/oder die Negativform, vorzugsweise Negativtiefziehform, in mindestens einer Richtung bewegt wird. Dabei wird die mittlere Dicke des Extrudates oder des Tiefziehlings in der Negativ- oder Negativtiefziehform unter 7000 µm, vorzugsweise unter 3000 µm, eingestellt. Das Extrudat nimmt dabei die mikroporöse, genarbte, strukturierte, geformte und/oder mit Oberflächendekoration versehene Form der Negativform oder der Negativtiefziehform an und wird sofort um mehr als 80 K, vorzugsweise um mehr als 140 K, gekühlt oder schockgekühlt.

Nach einer bevorzugten Ausführungsform des erfindungsgemäßen Verfahrens wird die aus dem Breitschlitzextruder austretende bahnförmige Schmelze auf einen Rand und/oder Rahmen der porösen Negativform oder porösen Negativtiefziehform und/oder des Werkzeugs aufgebracht und bedeckt unter Bewegung des Breitschlitzextruders und/oder der Negativform oder der Negativtiefziehform die Formoberfläche, wobei vor, während und/oder bei der Berührung von der Formoberfläche angesaugt und schockgekühlt wird.

Nach einer weiteren bevorzugten Ausführungsform des erfindungsgemäßen Verfahrens wird die aus dem Breitschlitzextruder austretende bahnenförmige Schmelze auf einen Rand oder Rahmen oder Rand der Formoberfläche der Negativtiefziehform aufgebracht, unter Bewegung des Breitschlitzextruders und/oder Negativform oder Negativtiefziehform in mindestens einer Richtung geführt, wobei das Extrudat eine Negativform auf ihrer Formfläche bis einschließlich zum Rand oder Rahmen abdeckt, wobei während und/oder bei der Berührung des Rahmens oder Randes oder allseitig umlaufenden Randes der Formoberfläche das Extrudat abgedichtet, angesaugt und gekühlt wird.

Nach einer bevorzugten Ausführungsform der Erfindung erfolgt die Herstellung des Kunststoffteiles oder Gegenstandes im Blas- oder Blasformverfahren. Dabei wird ein schmelzenförmiger Schlauch, vorzugsweise freihängend, in die Negativform, vorzugsweise in die senkrecht angeordnete Negativtiefziehform oder Negativform, gebracht. Der Schlauch wird in an sich bekannter Weise an einer oder an zwei oder mehreren Stellen abgequetscht oder abgetrennt und aufgeblasen, wobei als Gegenform eine weitere Form oder Negativform, der Verschlußdeckel oder eine Verschlußplatte Verwendung findet. In den gebildeten Hohlraum werden die Polyolefinschaumpartikel injiziert.

Wie bereits erwähnt, wird dabei als Kunststoffolie, -bahn, -platte, -masse, Blasformling eine ungeschäumte Polyolefinhomo- oder polyolefinhaltige Schicht oder Mehrfachschicht verwendet mit einer Schichtdicke von 0,25 bis 2 mm, vorzugsweise 0,5 bis 1,5 mm, die eine Schaumschicht mit einer Dicke von 0,5 bis 6 mm, vorzugsweise 1 bis 5 mm und/oder ein Schaumraumgewicht oder eine Schaumdichte von 25 bis 100 kg pro m², vorzugsweise 45 bis 80 kg pro m², aufweist. Auf diese Schaumschicht, die vorzugsweise durch chemische Treibmittel, physikalische Treibmittel oder durch Strahlenvernetzung hergestellt ist, werden die Polyolefinpartikel aufgebracht, erhitzt und mit der Folie, Bahn oder Schicht verbunden.

Da sowohl die verformte Schicht, die verformte Folienbahn, die Masse oder die Schmelze oder das Schaumlaminat als auch die Polyolefinpartikel nach der bevorzugten Ausführungsform auf der Basis von Polyolefinen sind oder polyolefinhaltig sind oder diese zu mehr als 50 Gew.-%, vorzugsweise mehr als 65 Gew.-%, enthalten, ist das Formteil oder Gegenstand gut recyclefähig.

Nach einer bevorzugten Ausführungsform besteht auch der für bestimmte Teile verwendete Träger oder die Versteifung aus Polyolefinen, so daß auch hier die Wiederverwendbarkeit oder Recyclefähigkeit gegeben ist.

Das erfindungsgemäße Verfahren wird vorzugsweise so durchgeführt, daß die Polyolefinpartikel erst eingebracht werden, wenn die Folie, Bahn, Platte, Masse, Schmelze oder Schicht die vorgegebene Form oder das Formteil angenommen hat, so daß die Polyolefinpartikel nicht die Endverformung, z. B. zu der Form der Instrumententafel oder Schalttafel bewirken. Würden die Polyolefinpartikel bereits bei der Vorformung eingebracht, so besteht das Risiko, daß eine gleichmäßige oder annähernd gleichmäßige Wanddicke der Folie, Bahn oder Platte nicht mehr möglich ist oder die Folie oder Bahn reißt oder verformt sich an unerwünschten Stellen vor Einbringung in die Form.

Kühlt man andererseits, um diese Nachteile zu vermeiden, dagegen die der Negativtiefziehform zugewandte Fläche der Kunststoffolie, -bahn oder -platte ab, um derartige Verformungen, das Reißen und dergleichen zu vermeiden, und hält die der Form abgewandten Seite heißer bzw. bei einer höheren Temperatur, so nimmt die Folie, Bahn oder Platte nicht die Prägung, Strukturierung die Poren und dergleichen der Form, vorzugsweise der Negativtiefziehform, in dem gewünschten Umfang an.

Nach einer bevorzugten Ausführungsform wird vor oder kurz vor der Thermoverformung auf der Rückseite der Kunststoffolie, kunststoffhaltigen Bahn oder Kunststoffplatte eine Oberflächenschicht oder ein Oberflächenschichtbereich auf eine Temperatur durch gesteuertes Heizen und/oder gesteuertes Abkühlen gehalten oder eingestellt, die um mehr als 5 °C, vorzugsweise um mehr als 10 °C, niedriger ist als die Temperatur auf der Negativtiefziehform zugewandten Folienfläche, Bahn oder Platte, während auf der der Negativtiefziehform oder der Form zugewandten Seite der Kunststoffolie, kunststoffhaltigen Bahn oder Kunststoffplatte, die Oberflächenschicht oder der Oberflächenschichtbereich sowie gegebenenfalls ein unter dieser Oberflächenschicht tiefer gelegener Schichtbereich auf eine (gegenüber der anderen Oberflächenschicht) höhere Temperatur in der Nähe oder oberhalb des Schmelzbereiches, Schmelzpunktes oder auf eine Temperatur innerhalb des thermoplastischen Bereiches (bis 260 °C) eingestellt oder aufgeheizt wird.

Die Erfindung betrifft weiterhin die Verwendung des Verfahrens zur Herstellung von Kraftfahrzeugteilen, Kraftfahrzeuginnenverkleidungen sowie Flugzeuginnenverkleidungen, vorzugsweise zur Herstellung von Schalttafeln oder Instrumententafeln, Säulen, Seitenwänden, Türverkleidungen oder Hutablagen von Kraftfahrzeugen.

Bei dem erfindungsgemäßen Verfahren und der erfindungsgernäßen Vorrichtung wird nach einer bevorzugten Ausführungsform eine Positiv- und Negativtiefziehform verwendet, die bereits ganz oder in Teilbereichen den Formen und Strukturen der anzufertigenden Instrumententafeln, Seitenwände, oder Türverkleidungen der Kraftfahrzeuge entspricht oder Teile davon, vorzugsweise in Negativ- oder Positivform aufweist.

### Zeichnungsbeschreibung

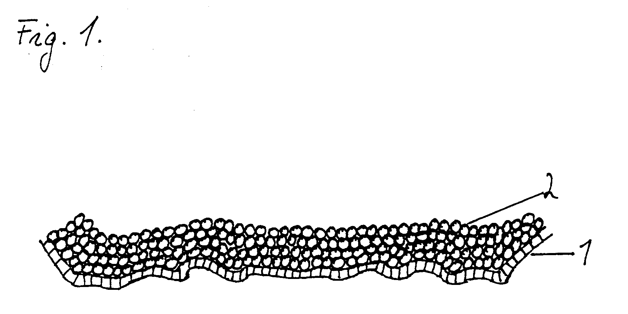

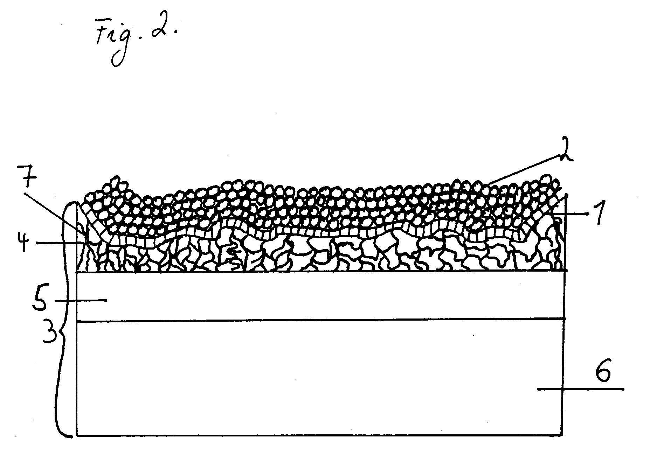

In den Figuren 1 und 2 sind schematisch in Form einer Vergrößerung Ausführungsformen des erfindungsgemäßen Verfahrens und der Vorrichtung dargestellt.

Unter 1 ist die verformte Schicht, die verformte Folie, Bahn, das Schaumlaminat, die Masse oder Schmelze schematisch dargestellt, wobei die vorhandenen Narbungen, Strukturierungen, Oberflächendekorationen in Form einer Vergrößerung wiedergegeben sind. An diese verformte Schicht, Folie, Bahn (1), die vorzugsweise aus Polyolefinen besteht oder polyolefinhaltig ist, sind Polyolefinschaumpartikel, vorzugsweise kugelähnliche Polyolefinschaumpartikel, (2) angeordnet. Eine Verformung der Narbungen, Prägungen oder Strukturierungen der Folie, Schicht oder Bahn durch die Polyolefinschaumpartikel kann nicht erfolgen, da diese bevorzugt in die Strukturierungen, Narbungen, Prägungen und dergleichen aufweisenden Form, Negativform (3) oder Negativtiefziehform angeordnet ist. Diese Form, Negativform, Negativtiefziehform besteht bevorzugt aus einer oberen Schicht (4), die Metallpartikel, Mikrometallpartikel oder Metallegierungspartikel enthält, die vorzugsweise im Metallspritzverfahren oder Flammspritzverfahren aufgebracht sind. In dieser Schicht sind feinste Poren, Mikroporen und dergleichen (7) angeordnet. Unter der Oberflächenschicht ist eine Stützschicht angebracht, die aus einer oder mehreren Schichten bestehen kann und eine Schichtdicke oder durchschnittliche Schichtdicke von 4 bis 120 mm, vorzugsweise 8 bis 80 mm, aufweist. Unter (6) ist die weitere Anordnung einer Stützschicht oder Dichtschicht vorgesehen.

## Patentansprüche

1. Verfahren zur Herstellung von Formteilen, bestehend aus mindestens einer äußeren Kunststoffschicht (1), die auf einer Oberflächenseite die Form des Teiles oder der Innenverkleidung aufweist, an der über eine Zwischenschicht oder unmittelbar mindestens eine Kunststoffschaumschicht angeordnet ist, wobei die geformte Kunststoffschicht (1) unter Verwendung an sich bekannter Verfahren hergestellt und mit der dahinter angeordneten Schaumschicht unmittelbar oder über eine Zwischenschicht verbunden ist, dabei die Kunststoffschicht (1) zunächst in der Herstellungsform verbleibt oder während oder nach dem Abkühlungsvorgang in eine zweite Form, die der Form sowie den Formprofilen der ersten Herstellungsform entspricht, gebracht wird, die Form mit einem Verschlußdeckel oder einem Verschlußteil abgeschlossen und/oder abgedichtet wird, nach der Endverformung und vor, während oder nach dem Verschluß der Form Kunststoffschaum- oder -hohlpartikel (2), ausgewählt aus der Gruppe der kugelähnlichen oder granulatförmigen, offenporigen oder geschlossenporigen Kunststoffschaum- und/oder -hohlpartikel oder -kugeln, in den Zwischenraum zwischen dem Kunststofformteil und dem Verschlußdeckel oder Verschlußteil eingebracht und über mehrere Zuleitungsvorrichtungen ein Heißgas oder Wasserdampf in den geschlossenen Zwischenraum, der die Partikel enthält, eingeleitet oder durchgeleitet wird, wobei die Partikel auf ihren Oberflächen ganz oder teilweise versintern, verschmelzen, verschweißen oder sich unter Haftverbindungen verformen und sich dabei gleichzeitig mit der darüber oder darunter angeordneten verformten Kunststoffschicht (1) verbinden, und das fertig verformte und mit einer Schaumschicht versehene Formteil nach oder während der Abkühlung entformt oder aus der Form entnommen wird, dadurch gekennzeichnet, daß das Verfahren zur Herstellung von Kraftfahrzeugteilen, Kraftfahrzeuginnenverkleidungen sowie Flugzeuginnenverkleidungen verwendet wird, daß zur Herstellung der geformten Kunststoffschicht Polyolefinfolien, thermoverformbare polyolefinhaltige Bahnen oder Platten oder Polyolefin- oder polyolefinhaltige Massen, -blasformlinge oder -schmelzen verwendet und im Negativtiefziehverfahren, Extrusionsgußverfahren, Blasformverfahren, Slush-Molding-Verfahren oder im Rotationssinterverfahren in einer Negativform oder Negativtiefziehform geformt werden, die eine poröse, mikroporöse oder mit feinsten Lochungen versehene Formoberfläche aufweist und strukturierte Oberflächen oder Wandungen für die Oberflächenstrukturierung, Oberflächendekoration oder Narbung der Folienoberfläche besitzt, und daß als Kunststoffschaum- oder -hohlpartikel Polyolefinpartikel, ausgewählt aus der Gruppe der kugelähnlichen polyolefinhaltigen und/oder offenporigen, vorzugsweise geschlossenporigen Polyolefinschaumkugeln und/oder -hohlkugeln oder ähnliche Polyolefinpartikel oder polyolefinhaltige Partikel verwendet werden, die durch nachträgliche Volumenausdehnung mit der darüber oder darunter angeordneten verformten und strukturierten, genarbten und/oder oberflächendkorierten Polyolefinschicht verbunden werden.

2. Verfahren nach Anspruch 1, dadurch gekennzeichnet, daß als Polyolefinschaum- oder -hohlpartikel solche verwendet werden, die sich bei Temperaturen von 80 bis 150 °C, vorzugsweise 100 bis 130 °C, um mehr als 3 Vol-%, vorzugsweise mehr als 5 Vol-%, ausdehnen.

3. Verfahren nach Ansprüchen 1 und 2, dadurch gekennzeichnet, daß unter Verwendung einer Temperaturdifferenz von vorzugsweise mehr als 30 °C zwischen der heißen Folie, Bahn, Platte, Masse, dem Blasformling oder der Schmelze und einer kälteren Negativform diese in die Negativform eingebracht wird und im Augenblick der Berührung mit der strukturierten Oberfläche oder Wandung des Negativwerkzeuges die Oberflächenstruktur, Oberflächendekoration, Narbung oder Strukturierung und die Form derselben annimmt und nachfolgend in der Negativform abkühlt und mit einer Schaumschicht versehen wird.

4. Verfahren nach einem oder mehreren der Ansprüche 1 und 2, dadurch gekennzeichnet, daß unter Verwendung einer Temperaturdifferenz von mehr als 30 °C, vorzugsweise mehr als 50 °C, zwischen der heißeren Folie, Bahn oder Platte und einer kälteren Negativtiefziehform abgekühlt und mit einer Schaumschicht versehen wird.

5. Verfahren nach einem oder mehreren der Ansprüche 1 bis 4, dadurch gekennzeichnet, daß das Heißgas oder der Wasserdampf in die Form mit einer Temperatur von
105 bis 160 °C, vorzugsweise
110 bis 150 °C,
eingeleitet wird.

6. Verfahren nach einem oder mehreren der Ansprüche 1 bis 5, dadurch gekennzeichnet, daß als Kunststoffolie, -bahn, -platte, -masse, Blasformling mit einer Schichtdicke von 0,25 bis 2,0 mm, vorzugsweise 0,5 bis 1,5 mm eine ungeschäumte Polyolefinmono- oder -mehrfachschicht verwendet wird, die eine Schaumschicht mit einer Dicke von 0,5 bis 6,0 mm, vorzugsweise 1, 0 bis 5,0 mm, mit einem Schaumraumgewicht oder einer Schaumdichte von 25 bis 100 kg pro m³, vorzugsweise 45 bis 80 kg pro m³, aufweist, daß auf diese Schaumschicht, die vorzugsweise durch chemische Treibmittel, physikalische Treibmittel oder durch Strahlenvernetzung hergestellt ist, die Polyolefinpartikel aufgebracht, erhitzt und damit verbunden werden.

7. Verfahren nach einem oder mehreren der Ansprüche 1 bis 6, dadurch gekennzeichnet, daß der Verschlußdeckel oder das Verschlußteil hinsichtlich seines Profiles und seiner Formgebung in einem Abstand von der Negativform oder Negativtiefziehform so angeordnet ist, daß sie in der Dicke, abzüglich der in der Negativ- oder Negativtiefziehform eingebrachten und verformten Schicht, Folie, Bahn oder des Schaumlaminates, im Profil und in der Formgebung derjenigen des Fertigformteiles direkt, annähernd oder in Teilbereichen entspricht.

8. Verfahren nach einem oder mehreren der Ansprüche 1 bis 7, dadurch gekennzeichnet, daß in der Form und/oder an oder in der Nähe des Verschlußdeckels oder des Verschlußteiles ein Träger und/oder eine Versteifung oder ein Versteifungskörper angeordnet oder angebracht wird, wobei ein Träger oder eine Versteifung oder ein Versteifungskörper verwendet wird, der bzw. die mehrere Durchgänge, Öffnungen, Ausnehmungen, Poren oder ähnliche Durchtrittsöffnungen für das Heißgas oder den Wasserdampf aufweist.

9. Verfahren nach einem oder mehreren der Ansprüche 1 bis 8, dadurch gekennzeichnet, daß ein Träger und/oder ein Versteifungskörper eingesetzt wird, der auf seiner Rückfläche das heißt der Negativform abgewandten Fläche, in Teilbereichen in Positivform die Form der Rückfläche des Fertigteiles aufweist.

10. Verfahren nach einem oder mehreren der Ansprüche 1 bis 9, dadurch gekennzeichnet, daß ein Verschlußdeckel oder ein Verschlußteil innerhalb des Verfahrens verwendet wird, die mehrere, vorzugsweise über die Fläche der Verschlußform verteilte Einleitungsöffnungen für das Heißgas und/oder den Wasserdampf aufweist und mindestens eine Ableitungsvorrichtung, eine Ableitungsöffnung oder ein Ableitungsrohr für das durchgetretene Heißgas, für Wasserdampf und/oder für Wasser besitzt.

11. Verfahren nach einem oder mehreren der Ansprüche 1 bis 10, dadurch gekennzeichnet, daß die Temperatur der Rückseite oder Rückfläche der Polyolefinschicht in der Negativform unmittelbar nach der Verformung und bei, vor oder nach der Einbringung der Polyolefinpartikel auf eine Temperatur von
10 bis 120 °C, vorzugsweise
40 bis 90 °C,
eingestellt wird.

12. Verfahren nach einem oder mehreren der Ansprüche 1 bis 11, dadurch gekennzeichnet, daß zur Regelung, Speicherung, Verteilung oder Zuleitung des Heißgases oder des Wasserdampfes und/oder zur Kühlung der Rückseite der Abflußform eine an die Abflußform angeordnete Kammer verwendet wird.

13. Verfahren nach einem oder mehreren der Ansprüche 1 bis 12, dadurch gekennzeichnet, daß eine poröse oder mikroporöse Formoberfläche enthaltende Negativform oder Negativtiefziehform mit Vorrichtungen zur Anlegung eines Unterdurckes oder Vakuums verwendet wird, daß während des Einfüllvorganges oder der Injektion der Polyolefinpartikel oder polyolefinhaltigen Partikel oder während einer Zeitteilperiode des Einfüllvorganges oder der Injektion, vorzugsweise zu Beginn der Einfüllung der Polyolefinpartikel, auf das in der Negativform befindliche strukturierte, genarbte oder dekorierte und geformte Formteil, das vorzugsweise im Blasverfahren oder Blasformverfahren, Extrusionsverfahren oder Extrusionsgußverfahren oder aus Schmelzen, Schmelzbahnen, Schläuchen oder Formlingen eingebracht wurde, oder das in der Negativtiefziehform befindliche strukturierte, genarbte oder dekorierte, ungeformte Formteil, das aus polyolefinhaltigen oder polyolefinbestehenden Folien, Bahnen, Platten im Negativtiefziehverfahren verformt wurde, ein Unterdruck oder Vakuum auf die der Negativtiefziehform zugewandte strukturierte, genarbte oder dekorierte Oberflächenschicht ausgeübt wird, so daß das Formteil in den zahlreichen Poren oder Mikroporen während des Einfüll- oder Injektionsvorganges in der Lage gehalten oder fixiert wird.

14. Verfahren nach einem oder mehreren der Ansprüche 1 bis 13, dadurch gekennzeichnet, daß während des Einfüllvorganges oder der Injektion der Polyolefinpartikel oder der polyolefinhaltigen Partikel zwischen der kälteren, genarbten, geprägten und/oder strukturierten Oberflächenschicht des Polyolefinformteiles oder des polyolefinhaltigen Formteiles oder Formteiles auf der Basis eines Schaumlaminates und der heißeren Rückschicht oder Rückseitenfläche des Polyolefinformteiles oder polyolefinhaltigen Formteiles ein Temperaturunterschied während der Dampfdurchleitung
von mehr als 5 °C, vorzugsweise
von mehr als 10 °C,
eingestellt wird und nach dem Versintern, Verschmelzen, Verschweißen oder unter Haftverbindung Verformen der Polyolefinpartikel oder polyolefinhaltigen Partikel sowie nach dem Verbinden derselben mit dem Formteil oder während dieses Vorganges nachfolgend von der Negativtiefziehform und/oder Abschlußform eine Abkühlung des Formteiles oder Gegenstandes um
mehr als 25 °C, vorzugsweise
mehr als 40 °C,
durchgeführt wird.

15. Vorrichtung zur Herstellung von Formteilen sowie Hilfs- und Zusatzvorrichtungen, Zuleitungen und/oder Vorrichtung zur Ausübung eines Druckunterschiedes, Heiz- und/oder Kühlvorrichtungen, wobei die Form mit einem Verschlußdeckel oder einem Verschlußteil zur Abschließung oder Abdichtung in der Form versehen ist, an dem Verschlußteil oder Verschlußdeckel oder einem Seitenwandteil mindestens eine Zuleitungsvorrichtung für ein Heißgas oder Wasserdampf und mehrere Verteilungsvorrichtungen für das Heißgas oder Wasserdampf angeordnet sind, und der Verschlußdeckel oder das Verschlußteil mit mindestens einer Kammer oder Vorrichtung zur Ausübung eines Druckunterschiedes, vorzugsweise eines Überdruckes und/oder oder zur Einführung eines Heißgases oder Wasserdampfes ausgestattet ist, dadurch gekennzeichnet, daß die verwendeten Formen Negativformen oder Negativtiefziehformen darstellen, die bereits ganz oder in Teilbereichen die Formen und Strukturen der anzufertigenden Kraftfahrzeugteilen oder -gegenständen, Kraftfahrzeuginnenverkleidungen sowie Flugzeuginnenverkleidungen aufweisen, daß die Negativform oder die Negativtiefziehform und/oder der Verschlußdeckel oder das Verschlußteil eine poröse oder mikroporöse metall- oder metallegierungshaltige oder mikrometallpartikelhaltige Oberflächenschicht, die im Metallspritzverfahren hergestellt ist und eine Metallschichtdicke oder Oberflächenschicht von
0,1 bis 10 mm
aufweist, besitzen, wobei die Poren oder Mikroporen durch die gesamte Schichtdicke der Metall- oder Metallegierungsschicht der Oberflächenschicht verlaufen, und daß danach mindestens eine Stützschicht angeordnet ist, die gegenüber der Metall-, Metallegierungsschicht oder mikrometallpartikelhaltigen Schicht im Durchschnitt größere Poren oder Mikroporen aufweist, wobei die Schichtdicke der Stützschicht
4 bis 120 mm
beträgt.

16. Vorrichtung nach Anspruch 15, dadurch gekennzeichnet, daß an dem Verschlußdeckel oder dem Verschlußteil oder an mindestens einem Seitenwandteil mindestens eine Ableitungsvorrichtung zur Ableitung von Heißgas, Wasserdampf oder kondensiertem Wasser angeordnet ist bzw. sind.

17. Vorrichtung nach Ansprüchen 15 und 16, dadurch gekennzeichnet, daß die Form und/oder der Verschlußdeckel oder das Verschlußteil eine poröse oder mikroporöse metall- oder metallegierungshaltige oder mikrometallpartikelhaltige Oberflächenschicht, die im Metallspritzverfahren hergestellt ist und eine Metallschichtdicke der Oberflächenschicht von
0,3 bis 4,0 mm
aufweist, besitzen, wobei die Poren oder Mikroporen durch die gesamte Schichtdicke der Metall- oder Metallegierungsschicht der Oberflächenschicht verlaufen, und daß danach mindestens eine Stützschicht angeordnet ist, die gegenüber der Metall-, Metallegierungsschicht oder mikrornetallpartikelhaltigen Schicht im Durchschnitt größere Poren oder Mikroporen aufweist, wobei die Schichtdicke der Stützschicht
8,0 bis 80,0 mm
beträgt.

18. Verwendung des Verfahrens nach einem oder mehreren der Ansprüche 1 bis 14 und/oder der Vorrichtung nach einem oder mehreren der Ansprüche 15 bis 17 zur Herstellung von Schalttafeln oder Instrumententafeln, Säulen, Seitenwänden, Türverkleidungen oder Hutablagen von Kraftfahrzeugen.

19. Verwendung nach Anspruch 18, dadurch gekennzeichnet, daß eine Negativtiefziehform verwendet wird, die bereits ganz oder in Teilbereichen den Formen und Strukturen der anzufertigenden Instrumententafeln, Seitenwände oder Türverkeidungen der Kraftfahrzeuge entspricht oder Teile davon, vorzugsweise in Negati- oder Positivform aufweist.

## Claims

1. A method for producing moulded parts, consisting of at least one Outer plastics layer (1) which has on one surface side the form of the part or of the interior trim, on which layer at least one plastics foam layer is arranged via an intermediate layer or directly, the shaped plastics layer (1) being produced using known methods and being joined directly or via an intermediate layer to the foam layer arranged behind it, in which the plastics layer (1) initially remains in the production mould or during or after the cooling operation is placed in a second mould which corresponds to the shape and the shaped profiles of the first production mould, the mould is closed and/or sealed with a closing cover or a closing part, after the final deformation and before, during or after the closure of the mould plastics foam particles or plastics hollow particles (2), selected from the group of sphere-like or granule-like, open-pored or closed-pored plastics foam particles and/or hollow particles or spheres, are introduced into the intermediate space between the plastics moulded part and the closing cover or closing part and a hot gas or steam is introduced or passed through via a plurality of feed devices into the closed intermediate space which contains the particles, the particles entirely or partly sintering, melting, fusing or being deformed with adhesive joins on their surfaces and in so doing at the same time join with the shaped plastics layer (1) which is arranged thereover or thereunder, and the finished, shaped moulded part provided with a foam layer is demoulded or is removed from the mould after or during cooling, characterised in that the method is used for producing parts for motor vehicles, interior trims for motor vehicles and interior trims for aircraft, that in order to produce the moulded plastics layer polyolefin films, thermoforming polyolefin-containing webs or sheets or polyolefin masses or polyolefin-containing masses, polyolefin blow mouldings or polyolefin melts are used and are shaped in a negative thermoforming process, cast film extrusion process, blow moulding process, slush moulding process or in a rotational sintering process in a negative mould or negative thermoforming mould which has a porous or microporous mould surface or one provided with very fine perforations and has textured surfaces or walls for the surface texturing, surface decoration or graining of the film surface, and that polyolefin particles, selected from the group of sphere-like polyolefin-containing and/or open-pored, preferably closed-pored polyolefin foam spheres and/or polyolefin hollow spheres or similar polyolefin particles or polyolefin-containing particles are used as plastics foam particles or hollow particles, which particles are joined by subsequent volumetric expansion to the shaped and textured, grained and/or surface-decorated polyolefin layer arranged thereover or thereunder.

2. A method according to Claim 1, characterised in that those polyolefin foam particles or polyolefin hollow particles which expand by more than 3% by volume, preferably more than 5% by volume, at temperatures of 80 to 150°C, preferably 100 to 130°C, are used as polyolefin foam particles or polyolefin hollow particles.

3. A method according to Claims 1 and 2, characterised in that using a temperature difference of preferably more than 30°C between the hot film, web, sheet, mass, the blow moulding or the melt and a colder negative mould the latter is introduced into the negative mould and at the moment of contact with the textured surface or wall of the negative mould adopts the surface structure, surface decoration, graining or texturing and the shape thereof and is subsequently cooled in the negative mould and is provided with a foam layer.

4. A method according to one or more of Claims 1 and 2, characterised in that [noun missing] is cooled using a temperature difference of more than 30°C, preferably more than 50°C, between the hotter film, web or sheet and a colder negative thermoforming mould and is provided with a foam layer.

5. A method according to one or more of Claims 1 to 4, characterised in that the hot gas or the steam is introduced into the mould at a temperature of
105 to 160°C, preferably
110 to 150°.

6. A method according to one or more of Claims 1 to 5, characterised in that an unfoamed polyolefin monolayer or multiple layer is used as the plastics film, web, sheet, mass or blow moulding having a layer thickness of 0.25 to 2.0 mm, preferably 0.5 to 1.5 mm, which layer has a foam layer having a thickness of 0.5 to 6.0 mm, preferably 1.0 to 5.0 mm, with a foam relative density or a foam density of 25 to 100 kg per m³, preferably 45 to 80 kg per m³, that the polyolefin particles are applied to this foam layer, which is preferably produced by chemical blowing agents, physical blowing agents or by radiation cross-linking, are heated and are joined thereto.

7. A method according to one or more of Claims 1 to 6, characterised in that the closing cover or the closing part is arranged in terms of its profile and its shaping at a distance from the negative mould or negative thermoforming mould such that it corresponds in thickness, minus the layer, film, web introduced into and shaped in the negative mould or negative thermoforming mould, or the foam laminate, in profile and in shaping to that of the finished moulded part directly, approximately or in partial regions.

8. A method according to one or more of Claims 1 to 7, characterised in that a backing and/or a reinforcement or a reinforcing member is arranged or applied in the mould and/or on or in the vicinity of the closing lid or of the closing part, with a backing or a reinforcement or a reinforcing member being used which has a plurality of passages, openings, recesses, pores or similar passage openings for the hot gas or the steam.

9. A method according to one or more of Claims 1 to 8, characterised in that a backing and/or a reinforcing member is used which has on its rear surface, that is to say the surface remote from the negative mould, the shape of the rear surface of the finished part in partial regions in positive form.

10. A method according to one or more of Claims 1 to 9, characterised in that a closing cover or a closing part is used within the process which has a plurality of introduction openings for the hot gas and/or the steam which are preferably distributed over the surface of the closing mould and has at least one withdrawal device, a withdrawal opening or a withdrawal pipe for the hot gas which has passed through, for steam and/or for water.

11. A method according to one or more of Claims 1 to 10, characterised in that the temperature of the rear side or rear surface of the polyolefin layer in the negative mould immediately after deformation and during, before or after the introduction of the polyolefin particles is set to a temperature of
10 to 120°C, preferably
40 to 90°C.

12. A method according to one or more of Claims 1 to 11, characterised in that a chamber arranged on the discharge mould is used for controlling, storing, distributing or feeding the hot gas or the steam and/or for cooling the rear side of the discharge mould.

13. A method according to one or more of Claims 1 to 12, characterised in that a negative mould or negative thermoforming mould containing a porous or microporous mould surface with devices for applying a partial vacuum or vacuum is used, that during the filling operation or the injection of the polyolefin particles or polyolefin-containing particles or during a partial time period of the filling operation or the injection, preferably at the beginning of the filling of the polyolefin particles, on to the textured, grained or decorated and shaped moulded part located in the negative mould, which part has preferably been introduced in a blowing process or blow moulding process, extrusion process or cast film extrusion process or from melts, melt webs, tubes or mouldings, or the textured, grained or decorated, unshaped moulded part located in the negative thermoforming mould, which has been shaped from films, webs, sheets containing or consisting of polyolefins in a negative thermoforming process, a partial vacuum or vacuum is exerted on the textured, grained or decorated surface layer facing the negative thermoforming mould, so that the moulded part is kept or fixed in position in the numerous pores or micropores during the filling or injection operation [sic].

14. A method according to one or more of Claims 1 to 13, characterised in that during the filling operation or the injection of the polyolefin particles or the polyolefin-containing particles a temperature difference
of more than 5°C, preferably
of more than 10°C,
is set between the colder, grained, embossed and/or textured surface layer of the polyolefin moulded part or of the polyolefin-containing moulded part or moulded part on the basis of a foam laminate and the hotter rear layer or rear side surface of the polyolefin moulded part or polyolefin-containing moulded part during the passing-through of steam and after the sintering, melting, fusing or deformation with adhesive joins of the polyolefin particles or polyolefin-containing particles and also after the joining thereof to the moulded part or during this operation subsequently cooling of the moulded part or article by
more than 25°C, preferably
more than 40°C,
is effected by the negative thermoforming mould and/or final mould.

15. An apparatus for the production of moulded parts and also auxiliary and additional devices, feeding lines and/or device for exerting a pressure difference, heating and/or cooling devices, wherein the mould is provided with a closing cover or a closing part for closing or sealing in the mould, at least one feed device for a hot gas or steam and a plurality of distribution devices for the hot gas or steam are arranged on the closing part or closing cover or a side wall part, and the closing cover or the closing part is equipped with at least one chamber or device for exerting a pressure difference, preferably an excess pressure, and/or or [sic] for introducing a hot gas or steam, characterised in that the moulds used represent negative moulds or negative thermoforming moulds which already have in their entirety or in partial regions the shapes and textures of the motor vehicle parts or motor vehicle articles, motor vehicle interior trims and aircraft interior trims which are to be produced, that the negative mould or the negative thermoforming mould and/or the closing cover or the closing part have a porous or microporous surface layer containing metal or metal alloy or containing micrometal particles which is produced in a spray metallising process and has a metal layer thickness or surface layer of
0.1 to 10 mm,
the pores or micropores extending through the entire layer thickness of the metal or metal alloy layer of the surface layer, and that at least one supporting layer is arranged thereafter which has on average larger pores or micropores than the metal layer, metal alloy layer or layer containing micrometal particles, with the layer thickness of the supporting layer being
4 to 120 mm.

16. An apparatus according to Claim 15, characterised in that at least one withdrawal device for withdrawing hot gas, steam or condensed water is or are arranged on the closing cover or the closing part or on at least one side wall part.

17. An apparatus according to Claims 15 and 16, characterised in that the mould and/or the closing cover or the closing part has a porous or microporous surface layer containing metal or metal alloy or containing micrometal particles which is produced in a spray metallising process and has a metal layer thickness of the surface layer of
0.3 to 4.0 mm,
the pores or micropores extending through the entire layer thickness of the metal or metal alloy layer of the surface layer, and that at least one supporting layer is arranged thereafter which has on average larger pores or micropores than the metal layer, metal alloy layer or layer containing micrometal particles, with the layer thickness of the supporting layer being
8.0 to 80.0 mm.

18. The use of the method according to one or more of Claims 1 to 14, and/or of the apparatus according to one or more of Claims 15 to 17, for the production of control panels or instrument panels, columns, side walls, door trims or parcel shelves of motor vehicles.

19. The use according to Claim 18, characterised in that a negative thermoforming mould is used which already corresponds in its entirety or in partial regions to the shapes and textures of the instrument panels, side walls or door trims of the motor vehicles which are to be produced or has parts thereof, preferably in a negative or positive form.

## Revendications

1. Procédé pour la production d'objets moulés, constitués d'au moins une couche en matière plastique externe (1), qui présente d'un côté superficiel la forme de l'objet ou de la garniture intérieure, sur laquelle est disposée au moins une couche de mousse en matière plastique, directement ou par le biais d'une couche intermédiaire, la couche en matière plastique moulée (1) ayant été produite en utilisant des procédés connus en soi et étant reliée à la couche de mousse disposée derrière, directement ou par le biais d'une couche intermédiaire, la couche en matière plastique (1) demeurant d'abord dans le moule de production ou étant amenée, pendant ou après le processus de refroidissement, dans un deuxième moule qui correspond à la forme et aux profils de moulage du premier moule de production, le moule étant obturé et/ou rendu étanche à l'aide d'un couvercle de fermeture ou d'une pièce de fermeture, des particules de mousse ou des particules creuses en matière plastique (2), choisies parmi le groupe des particules de mousse et/ou des particules creuses ou des billes en matière plastique sous forme de sphères ou de granulés, à pores ouverts ou fermés, étant introduites dans la cavité entre l'objet moulé en matière plastique et le couvercle de fermeture ou la pièce de fermeture, après le moulage définitif et avant, pendant ou après la fermeture du moule, et un gaz chaud ou de la vapeur d'eau étant introduit(e) ou passé(e) par plusieurs dispositifs d'alimentation dans la cavité fermée qui contient les particules, étape pendant laquelle les particules s'agglomèrent, fusionnent, se soudent ou se déforment par adhérence, entièrement ou en partie, sur leurs surfaces, et se lient de cette façon en même temps à la couche en matière plastique (1) moulée disposée au-dessus ou en dessous, et l'objet entièrement moulé et muni d'une couche de mousse étant démoulé ou prélevé du moule après ou pendant le refroidissement, caractérisé en ce que le procédé est utilisé pour la production de pièces pour véhicules automobiles, de garnitures intérieures de véhicules automobiles, de même que de garnitures intérieures d'avions, qu'on utilise pour la production de la couche en matière plastique moulée des feuilles polyoléfiniques, des bandes ou des plaques thermoplastiques contenant des polyoléfines ou des compositions, ébauches de soufflage ou compositions en fusion polyoléfiniques ou contenant des polyoléfines et qu'on les moule par le procédé d'emboutissage négatif, par le procédé de coulée par extrusion, par le procédé de moulage par soufflage, par le procédé de coulée en moule creux ou par le procédé de moulage par centrifugation dans un moule négatif ou dans un moule d'emboutissage négatif qui présente une surface de moulage poreuse, microporeuse ou munie de très fines perforations et qui possède des surfaces ou des parois texturées pour la texturation superficielle, la décoration superficielle ou le grainage de la surface de la feuille, et qu'on utilise, à titre de particules de mousse ou de particules creuses en matière plastique, des particules polyoléfiniques choisies parmi le groupe des billes de mousse et/ou billes creuses polyoléfiniques sous forme de sphères, contenant des polyoléfines et/ou à pores ouverts, de préférence à pores fermés, ou des particules polyoléfiniques ou des particules contenant des polyoléfines semblables, qui sont reliées par dilatation subséquente du volume à la couche polyoléfinique disposée au-dessus ou en dessous, moulée et texturée, grainée et/ou décorée en surface.

2. Procédé selon la revendication 1, caractérisé en ce qu'on utilise à titre de particules de mousse ou de particules creuses polyoléfiniques celles qui se dilatent à des températures de 80 à 150 °C, de préférence de 100 à 130 °C, de plus de 3 % en volume, de préférence de plus de 5 % en volume.

3. Procédé selon les revendications 1 et 2, caractérisé en ce qu'on introduit, en utilisant une différence de température de préférence de plus de 30 °C entre la feuille, la bande, la plaque, la masse, l'ébauche de soufflage ou la composition en fusion chaude et un moule négatif plus froid, celle-ci dans le moule négatif et qu'elle prend la texture superficielle, la décoration superficielle, le grainage ou la texturation et la forme de la surface ou paroi texturée de l'outil négatif au moment du contact avec celui-ci et qu'elle est ensuite refroidie dans le moule négatif et munie d'une couche de mousse.

4. Procédé selon une ou plusieurs des revendications 1 et 2, caractérisé en ce qu'on refroidit en utilisant une différence de température de plus de 30 °C, de préférence de plus de 50 °C, entre la feuille, la bande ou la plaque plus chaude et un moule d'emboutissage négatif plus froid, et que celle-ci est munie d'une couche de mousse.

5. Procédé selon une ou plusieurs des revendications 1 à 4, caractérisé en ce qu'on introduit le gaz chaud ou la vapeur d'eau dans le moule à une température
de 105 à 160 °C, de préférence
de 110 à 150 °C.

6. Procédé selon une ou plusieurs des revendications 1 à 5, caractérisé en ce qu'on utilise en tant que feuille, bande, plaque, masse, ébauche de soufflage en matière plastique avec une épaisseur de couche de 0,25 à 2,0 mm, de préférence de 0,5 à 1,5 mm, une monocouche ou une couche multiple en polyoléfine non-expansée, qui présente une couche de mousse avec une épaisseur de 0,5 à 6,0 mm, de préférence de 1,0 à 5,0 mm, avec une masse volumique de mousse ou une densité de mousse de 25 à 100 kg par m³, de préférence de 45 à 80 kg par m³, qu'on applique, chauffe et relie les particules polyoléfiniques à cette couche de mousse qui a été produite de préférence par des agents moussants chimiques, par des agents moussants physiques ou par réticulation par irradiation.

7. Procédé selon une ou plusieurs des revendications 1 à 6, caractérisé en ce que le couvercle de fermeture ou la pièce de fermeture est disposé(e), en ce qui concerne son profil et sa forme, à une distance du moule négatif ou du moule d'emboutissage négatif telle qu'il correspond tout à fait, environ ou dans des zones partielles, du point de vue de l'épaisseur, déduction faite de la couche, feuille, bande ou stratifié de mousse moulé(e) et introduit(e) dans le moule négatif ou dans le moule d'emboutissage négatif, du point de vue du profil et du point de vue de la forme, à celle de l'objet moulé fini.

8. Procédé selon une ou plusieurs des revendications 1 à 7, caractérisé en ce qu'un support et/ou un renforcement ou un corps de renforcement est disposé ou fixé dans le moule et/ou contre ou au voisinage du couvercle de fermeture ou de la pièce de fermeture, en utilisant un support ou un renforcement ou un corps de renforcement qui présente plusieurs passages, ouvertures, évidements, pores ou des ouvertures de passage semblables pour le gaz chaud ou la vapeur d'eau.

9. Procédé selon une ou plusieurs des revendications 1 à 8, caractérisé en ce qu'on utilise un support et/ou un corps de renforcement qui présente sur sa surface arrière, c'est-à-dire sur la surface opposée au moule négatif, dans des zones partielles, la forme de la surface arrière de l'objet moulé fini en forme positive.

10. Procédé selon une ou plusieurs des revendications 1 à 9, caractérisé en ce qu'un couvercle de fermeture ou une pièce de fermeture est utilisé(e) au cours du procédé, qui présente plusieurs ouvertures d'alimentation distribuées de préférence sur la surface du moule de fermeture, pour le gaz chaud et/ou la vapeur d'eau et qui possède au moins un dispositif d'évacuation, une ouverture d'évacuation ou un tuyau d'évacuation pour le gaz chaud, pour la vapeur d'eau et/ou pour l'eau passé(e).

11. Procédé selon une ou plusieurs des revendications 1 à 10, caractérisé en ce que la température du côté arrière ou de la surface arrière de la couche polyoléfinique dans le moule négatif est réglée immédiatement après le moulage et pendant, avant ou après l'introduction des particules polyoléfiniques à une température
de 10 à 120 °C, de préférence
de 40 à 90 °C.

12. Procédé selon une ou plusieurs des revendications 1 à 11, caractérisé en ce qu'on utilise une chambre disposée de manière adjacente au moule d'évacuation pour le réglage, le stockage, la distribution ou l'alimentation du gaz chaud ou de la vapeur d'eau et/ou pour le refroidissement du côté arrière du moule d'évacuation.

13. Procédé selon une ou plusieurs des revendications 1 à 12, caractérisé en ce qu'on utilise un moule négatif ou un moule d'emboutissage négatif possédant une surface de moulage poreuse ou microporeuse, avec des dispositifs pour l'application d'une dépression ou d'un vide, qu'on applique une dépression ou un vide à la couche superficielle texturée, grainée ou décorée, tournée vers le moule d'emboutissage négatif, pendant le processus de remplissage ou pendant l'injection des particules polyoléfiniques ou des particules contenant des polyoléfines, ou pendant une période partielle du processus de remplissage ou de l'injection, de préférence au début du remplissage des particules polyoléfiniques, sur l'objet moulé texturé, grainé ou décoré, se trouvant dans le moule négatif, qui a été introduit de préférence par le procédé de soufflage ou par le procédé de moulage par soufflage, par le procédé d'extrusion ou le procédé de coulée par extrusion ou à partir de compositions en fusion, de bandes en fusion, de tubes ou d'ébauches, ou sur l'objet non-moulé texturé, grainé ou décoré, se trouvant dans le moule d'emboutissage négatif et qui a été moulé par le procédé d'emboutissage négatif à partir de feuilles, bandes, plaques constituées de polyoléfines ou contenant des polyoléfines, de telle manière que l'objet moulé est maintenu ou fixé en position dans les nombreux pores ou micropores pendant le processus de remplissage ou d'injection.

14. Procédé selon une ou plusieurs des revendications 1 à 13, caractérisé en ce qu'on règle pendant le processus de remplissage ou d'injection des particules polyoléfiniques ou des particules contenant des polyoléfines, entre la couche superficielle plus froide, grainée, gaufrée et/ou texturée de l'objet polyoléfinique moulé ou de l'objet moulé contenant des polyoléfines ou de l'objet moulé à base d'un stratifié de mousse et la couche arrière ou la surface arrière plus chaude de l'objet polyoléfinique moulé ou de l'objet moulé contenant des polyoléfines, une différence de température pendant le passage de la vapeur
de plus de 5 °C, de préférence
de plus de 10 °C,
et que, après l'agglomération, la fusion, le soudage ou le moulage par adhérence des particules polyoléfiniques ou des particules contenant des polyoléfines, de même qu'après la liaison de celles-ci avec l'objet moulé, ou pendant ce processus, on effectue ensuite grâce au moule d'emboutissage négatif et/ou au moule de fermeture, un refroidissement de l'objet moulé ou de l'article
de plus de 25 °C, de préférence
de plus de 40 °C.

15. Dispositif pour la production d'objets moulés, de même que dispositifs auxiliaires et accessoires, conduites d'alimentation et/ou dispositif pour exercer une différence de pression, dispositifs de chauffage et/ou de refroidissement, le moule étant muni d'un couvercle de fermeture ou d'une pièce de fermeture pour obturer ou rendre étanche le moule, sur la pièce de fermeture ou sur le couvercle de fermeture ou sur une partie de paroi latérale étant disposé au moins un dispositif d'alimentation pour un gaz chaud ou pour la vapeur d'eau et plusieurs dispositifs de distribution pour le gaz chaud ou pour la vapeur d'eau, et le couvercle de fermeture ou la pièce de fermeture étant muni(e) d'au moins une chambre ou dispositif pour exercer une différence de pression, de préférence une surpression, et/ou pour l'introduction d'un gaz chaud ou de vapeur d'eau, caractérisé en ce que les moules utilisés représentent des moules négatifs ou des moules d'emboutissage négatif qui présentent déjà entièrement ou dans des zones partielles les formes et les textures des pièces ou des articles pour véhicules automobiles, des garnitures intérieures de véhicules automobiles, de même que des garnitures intérieures d'avions à fabriquer, que le moule négatif ou le moule d'emboutissage négatif et/ou le couvercle de fermeture ou la pièce de fermeture possèdent une couche superficielle poreuse ou microporeuse, contenant du métal ou des alliages métalliques ou contenant des particules micrométalliques, qui a été produite par un procédé de métallisation au pistolet et qui présente une épaisseur de couche métallique ou une couche superficielle de
0,1 à 10 mm,
les pores ou les micropores passant à travers toute l'épaisseur de la couche métallique ou d'alliage métallique de la couche superficielle, et qu'ensuite au moins une couche de support est prévue, qui présente par rapport à la couche métallique, d'alliage métallique ou contenant des particules micrométalliques des pores ou des micropores en moyenne plus grands, l'épaisseur de la couche de support s'élevant à
4 à 120 mm.

16. Dispositif selon la revendication 15, caractérisé en ce qu'au moins un dispositif d'évacuation pour l'évacuation du gaz chaud, de la vapeur d'eau ou de l'eau condensée est (sont) disposé(s) sur le couvercle de fermeture ou sur la pièce de fermeture ou sur au moins une partie de paroi latérale.

17. Dispositif selon les revendications 15 et 16, caractérisé en ce que le moule et/ou le couvercle de fermeture ou la pièce de fermeture possède une couche superficielle poreuse ou microporeuse, contenant du métal ou des alliages métalliques ou contenant des particules micrométalliques, qui a été produite par un procédé de métallisation au pistolet et qui présente une épaisseur de couche métallique de la couche superficielle de
0,3 à 4,0 mm,
les pores ou les micropores passant à travers toute l'épaisseur de la couche métallique ou d'alliage métallique de la couche superficielle, et qu'ensuite au moins une couche de support est prévue, qui présente par rapport à la couche métallique, d'alliage métallique ou contenant des particules micrométalliques des pores ou des micropores en moyenne plus grands, l'épaisseur de la couche de support s'élevant à
8,0 à 80,0 mm.

18. Utilisation du procédé selon une ou plusieurs des revendications 1 à 14 et/ou du dispositif selon une ou plusieurs des revendications 15 à 17 pour la production de tableaux de bord ou de tableaux d'instruments, de montants, de parois latérales, de garnitures de portières ou de plages arrières de véhicules automobiles.

19. Utilisation selon la revendication 18, caractérisé en ce qu'on utilise un moule d'emboutissage négatif qui correspond déjà entièrement ou dans des zones partielles aux formes et aux textures des tableaux d'instruments, des parois latérales ou des garnitures de portières de véhicules automobiles ou qui présente des parties de celles-ci, de préférence sous forme négative ou positive.
